# EUROPEAN PATENT APPLICATION

(11) **EP 3 145 166 A1**
(43) Date of publication of application: **22.03.2017**
(21) Application number: 16187641.2
(22) Date of filing: 07.09.2016
(51) Int. Cl.: H04N 1/00, G06F 3/12

(54) **INFORMATION PROCESSING SYSTEM AND INFORMATION PROCESSING METHOD FOR CARRYING OUT WORKFLOWS USING USER SPECIFIC SETTINGS**

(30) Priority: 15.09.2015 JP 2015181446
(71) Applicant: Ricoh Company, Ltd., Tokyo 143-8555 (JP)
(72) Inventor: SAWAMURA, Megumi, Tokyo, 143-8555 (JP)
(74) Representative: Schwabe - Sandmair - Marx

(57) **Abstract**

An image generating device (20) is connected to a process executing device (22) that executes a series of processes defined in workflow information on image data, and includes: an image generating unit (41) to generate image data; a workflow selecting unit (45) to select any of pieces of workflow information according to a user's operation; a registration-information acquiring unit (48) to acquire user registration information including information on the user; a specific-value determining unit (49) to determine whether all user-specific values used in execution of a series of processes defined in the selected workflow information are included in the user registration information; and a stop unit (52) to make, if any of the user-specific values is not included in the user registration information, the user unable to manipulate an instruction to execute a series of processes to be executed according to workflow information by using the user-specific value not included.

## Description

### BACKGROUND OF THE INVENTION

### 1. Field of the Invention

The present invention relates to an information processing system, an information processing method, and an image generating device.

### 2. Description of the Related Art

Conventionally, a multifunction peripheral (MFP) with functions such as a printer, a scanner, a facsimile, etc. has a function of executing a series of processes on image data captured by the scanner or the like according to workflow information that defines procedures of multiple processes. By executing the series of processes according to the workflow information, the MFP can automatically send the captured image data to a specified folder, or can automatically send the captured image data via e-mail. Furthermore, there is known a system in which instead of an MFP, a server executes processes. In this system, the MFP transmits captured image data to the server, and the server executes a series of processes on the image data according to workflow information.

In a case where an MFP or a server executes a series of processes according to workflow information, the MFP receives a setting value input by a user prior to the execution of the processes. For example, the MFP displays a screen or the like for selecting a delivery destination on an operation panel thereof, and receives a setting value indicating a delivery destination input by a user.

In Japanese Unexamined Patent Application Publication No. 2010-200007, there is described an MFP that notifies a user of a message indicating an optimal process in order to prevent wasteful consumption of resources.

Incidentally, when executing a series of processes workflow information, an MFP may acquire pre-registered user-specific information as a setting value. For example, as the setting value, the MFP may acquire key data or the like for encrypting pre-registered user's e-mail address or pre-registered document data. However, if such data has not been pre-registered, the MFP cannot complete the processes; therefore, even if a user has requested the execution of the processes, the execution of the processes results in an error.

In view of the above, there is a need to provide an information processing system, information processing method, and image generating device capable of preventing a process resulting in an error from being ordered by a user.

### SUMMARY OF THE INVENTION

Exemplary embodiments of the present invention, there is provided an information processing system comprising: an image generating device configured to generate image data; and a process executing device configured to execute a series of processes defined in workflow information on the image data, wherein the workflow information includes flow information that indicates the flow of the series of processes, item information that indicates items of setting values to be set in advance to execute the series of processes, and user-specific information that indicates a user-specific value specific to each user out of the setting values to be set in advance, and the image generating device includes: an image generating unit configured to generate image data; a workflow selecting unit configured to select any of pieces of workflow information according to a user's operation; a registration-information acquiring unit configured to acquire user registration information including information on the user; a specific-value determining unit configured to determine whether all user-specific values used in execution of a series of processes defined in the selected workflow information are included in the user registration information; and a stop unit configured to make, if any of the user-specific values is not included in the user registration information, the user unable to manipulate an instruction to execute a series of processes to be executed according to workflow information by using the user-specific value not included.

Exemplary embodiments of the present invention also provide an information processing method that is implemented on an information processing system that includes an image generating device configured to generate image data; and a process executing device configured to execute a series of processes defined in workflow information on the image data, wherein, the workflow information includes flow information that indicates the flow of the series of processes, item information that indicates items of setting values to be set in advance to execute the series of processes, and user-specific information that indicates a user-specific value specific to each user out of the setting values to be set in advance, the information processing method comprising: an image generating unit of the image generating device generates image data; a workflow selecting unit of the image generating device selects any of pieces of workflow information according to a user's operation; a registration-information acquiring unit of the image generating device acquires user registration information including information on the user; a specific-value determining unit of the image generating device determines whether all user-specific values used in execution of a series of processes defined in the selected workflow information are included in the user registration information; and a stop unit of the image generating device makes, if any of the user-specific values is not included in the user registration information, the user unable to manipulate an instruction to execute a series of processes to be executed according to workflow information by using the user-specific value not included.

Exemplary embodiments of the present invention also provide an image generating device connected to a process executing device that executes a series of processes defined in workflow information on image data, wherein the workflow information includes flow information that indicates the flow of the series of processes, item information that indicates items of setting values to be set in advance to execute the series of processes, and user-specific information that indicates a user-specific value specific to each user out of the setting values to be set in advance, the image generating device comprising: an image generating unit configured to generate image data; a workflow selecting unit configured to select any of pieces of workflow information according to a user's operation; a registration-information acquiring unit configured to acquire user registration information including information on the user; a specific-value determining unit configured to determine whether all user-specific values used in execution of a series of processes defined in the selected workflow information are included in the user registration information; and a stop unit configured to make, if any of the user-specific values is not included in the user registration information, the user unable to manipulate an instruction to execute a series of processes to be executed according to workflow information by using the user-specific value not included.

According to exemplary embodiments of the present invention, it is possible to prevent a process resulting in an error from being ordered by a user.

### BRIEF DESCRIPTION OF THE DRAWINGS

FIG. 1 is a diagram illustrating an information processing system according to an embodiment of the present invention;
FIG. 2 is a diagram illustrating an example of workflow executed by a process executing device;
FIG. 3 is a diagram illustrating an example of workflow information;
FIG. 4 is a diagram illustrating a functional configuration of a multifunction peripheral (MFP);
FIG. 5 is a diagram illustrating a functional configuration of the process executing device;
FIG. 6 is a sequence diagram illustrating the flow of a process performed in the information processing system;
FIG. 7 is a flowchart illustrating the flow of a process performed by the process executing device at the time of generation of workflow information;
FIG. 8 is a diagram illustrating an example of workflow information including some of processes determined to be inexecutable;
FIG. 9 is a flowchart illustrating a determining process performed in an MFP according to a first variation of the embodiment;
FIG. 10 is a diagram illustrating an example of workflow information in a second variation of the embodiment;
FIG. 11 is a flowchart illustrating a determining process performed in an MFP according to the second variation;
FIG. 12 is a diagram illustrating an example of a normal setting-value input screen for setting a delivery destination;
FIG. 13 is a diagram illustrating an example of a setting-value input screen for setting a delivery destination, where input of some destination is disabled;
FIG. 14 is a diagram illustrating an example of a hardware configuration of the process executing device; and
FIG. 15 is a diagram illustrating an example of a hardware configuration of the MFP.

The accompanying drawings are intended to depict exemplary embodiments of the present invention and should not be interpreted to limit the scope thereof. Identical or similar reference numerals designate identical or similar components throughout the various drawings.

### DETAILED DESCRIPTION OF THE PREFERRED EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An exemplary embodiment of the present invention will be described in detail below on the basis of accompanying drawings. Incidentally, the present invention is not limited by this embodiment.

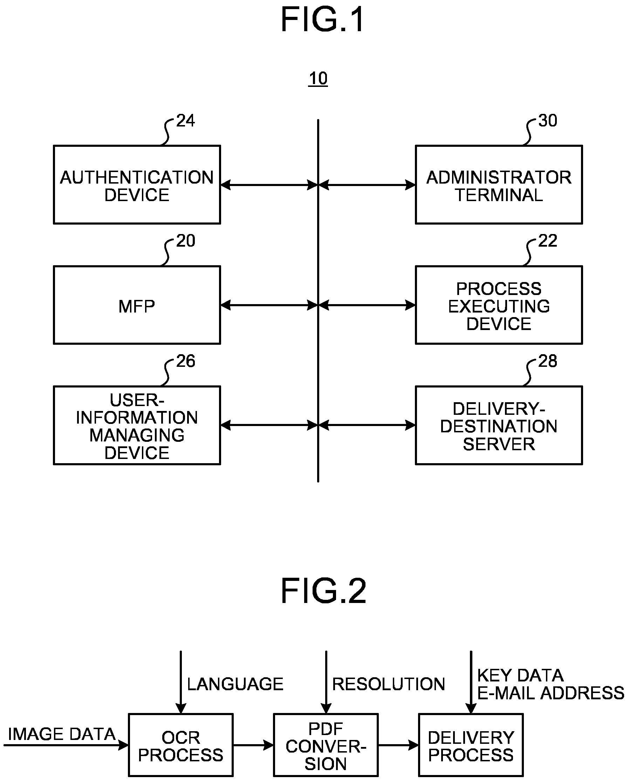

FIG. 1 is a diagram illustrating an information processing system 10 according to the embodiment. The information processing system 10 includes a multifunction peripheral (MFP) 20, a process executing device 22, an authentication device 24, a user-information managing device 26, a delivery-destination server 28, and an administrator terminal 30.

The process executing device 22, the authentication device 24, the user-information managing device 26, and the delivery-destination server 28 are an information processing apparatus composed of a server or one or more computers such as workstations. These devices have stored therein a program in advance and execute data processing according to the program. The MFP 20, the process executing device 22, the authentication device 24, the user-information managing device 26, the delivery-destination server 28, and the administrator terminal 30 have a communication function, and are connected to one another via a network.

The network is, for example, a local area network (LAN), a virtual private network (VPN), or a wide area network (WAN) connected to a LAN through a router. Furthermore, the network can include the Internet or telephone communication lines, etc. Moreover, the network can be composed of a wired network, or can be partially or wholly composed of a wireless network.

The MFP 20 scans the surface of a sheet and generates image data. The MFP 20 can scan multiple sheets in a batch and generate document data including multiple pieces of image data. Furthermore, the MFP 20 transmits the generated image data to the process executing device 22 via the network.

The MFP 20 is an example of an image generating device that generates image data. Instead of the MFP 20, the information processing system 10 can include a digital camera, a smartphone, a portable telephone, a tablet terminal, a notebook personal computer (PC), or the like as an image generating device.

The process executing device 22 receives image data generated by the MFP 20. The process executing device 22 executes a series of processes on the received image data according to workflow information that defines the series of processes. Incidentally, the process executing device 22 is realized by a computer included in the MFP 20, and can be configured to be integrated into the MFP 20.

The authentication device 24 authenticates a user who is going to use the MFP 20. The user inputs login information to the MFP 20. The MFP 20 transmits the login information input by the user to the authentication device 24. The authentication device 24 verifies whether the login information is legitimate, and notifies the MFP 20 of whether the authentication is successful or not. If the authentication performed by the authentication device 24 is successful, the MFP 20 permits the user to use the MFP 20.

The user-information managing device 26 stores user registration information, which includes information on a user, with respect to each user. The user registration information includes, for example, an e-mail address specific to the user, a folder directory indicating an address of a folder specific to the user, key data used exclusively by the user, user's authority for use of the MFP 20, etc. The user registration information is pre-registered, for example, by the user through the use of the administrator terminal 30. If the user-information managing device 26 has received login information from the MFP 20, the user-information managing device 26 acquires user registration information of a corresponding user by using the login information as a key, and transmits the acquired user registration information to the MFP 20.

The delivery-destination server 28 is, for example, a mail server or file server. The delivery-destination server 28 receives document data, which is obtained as a result of a series of processes executed according to workflow information, from the process executing device 22. Then, the delivery-destination server 28 saves the received document data.

The administrator terminal 30 is an information processing apparatus used by an administrator. The administrator terminal 30 is, for example, a desktop PC, a notebook PC, a smartphone, a tablet terminal, a portable telephone, or the like. The administrator terminal 30 has an information input function, a communication function, a display function, etc. The administrator terminal 30 accesses the process executing device 22 via the network, and generates workflow information according to administrator's operation. Furthermore, the administrator terminal 30 accesses the MFP 20, the authentication device 24, and the user-information managing device 26 via the network, and makes settings, etc. according to administrator's operation.

FIG. 2 is a diagram showing an example of workflow executed by the process executing device 22. Multiple pieces of workflow information generated by the administrator have been registered in the process executing device 22.

The workflow information defines at least one process to be executed by the process executing device 22. For example, workflow information shown in FIG. 2 defines that the process executing device 22 shall execute an optical character recognition (OCR) process, a PDF conversion, and a delivery process. Furthermore, the workflow information defines the execution order of the processes. For example, the workflow information shown in FIG. 2 defines that the process executing device 22 shall execute the OCR process, the PDF conversion, and the delivery process in this order.

In the OCR process, the process executing device 22 recognizes characters included in specified image data and generates text data. In the PDF conversion, the process executing device 22 converts the file format of the image data to PDF. In the delivery process, the process executing device 22 transmits document data generated as a result of the series of processes to the specified delivery-destination server 28.

The workflow information can further include other processes. For example, the workflow information can include an image correction for correcting the specified image data, a two-dimensional code reading process for reading a two-dimensional code such as a bar code thereby acquiring information, etc.

When the process executing device 22 execute the processes, the process executing device 22 uses a setting value. For example, when performing the OCR process, the process executing device 22 uses, for example, information designating the language of characters to be recognized as a setting value. Furthermore, when performing the PDF conversion, the process executing device 22 uses, for example, information indicating the resolution used in the PDF conversion as a setting value. Moreover, when performing the delivery process, the process executing device 22 uses, for example, key data for encrypting document data and a destination e-mail address as setting values.

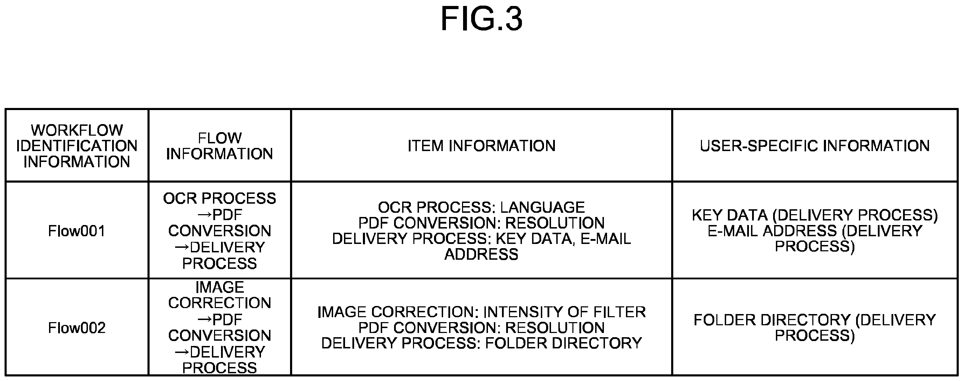

FIG. 3 is a diagram showing an example of workflow information. For example, the process executing device 22 has stored therein the workflow information shown in FIG. 3. The workflow information includes workflow identification information, flow information, item information, and user-specific information.

The workflow identification information is information that identifies workflow information. The workflow identification information is a value specific to each piece of workflow information.

The flow information is information that indicates the flow of a series of processes. That is, the flow information indicates contents of processes to be executed and the execution order of the processes. Flow information of "Flow001" in FIG. 3 indicates that an OCR process, a PDF conversion, and a delivery process are executed in this order. Furthermore, flow information of "Flow002" in FIG. 3 indicates that an image correction, a PDF conversion, and a delivery process are executed in this order.

The item information is information that indicates items of setting values to be set in advance to execute a series of processes. The item information indicates items of setting values to be set in advance to execute respective processes defined in flow information. Item information of "Flow001" in FIG. 3 indicates, as items to be set, the "language" used in the OCR process, the "resolution" used in the PDF conversion, and the "key data" and "e-mail address" used in the delivery process. Furthermore, item information of "Flow002" in FIG. 3 indicates, as items to be set, the "intensity of filter" used in the image correction, the "resolution" used in the PDF conversion, and the "folder directory" used in the delivery process.

The user-specific information is information that indicates a user-specific value specific to each user out of setting values to be set in advance. The user-specific value is a setting value that differs from one user to another. User-specific values include, for example, user's e-mail address, user's folder directory, user's key data, user's authority for use of the MFP 20, etc. User-specific information of "Flow001" in FIG. 3 indicates the "key data" and "e-mail address" used in the delivery process as user-specific values. Furthermore, user-specific information of "Flow002" in FIG. 3 indicates the "folder directory" used in the delivery process as a user-specific value.

Incidentally, if no user-specific value is included in setting values, workflow information is not provided with the item of user-specific information.

Such workflow information is written in a data format that can be interpreted by a computer. The workflow information is written in, for example, Extensible Markup Language (XML).

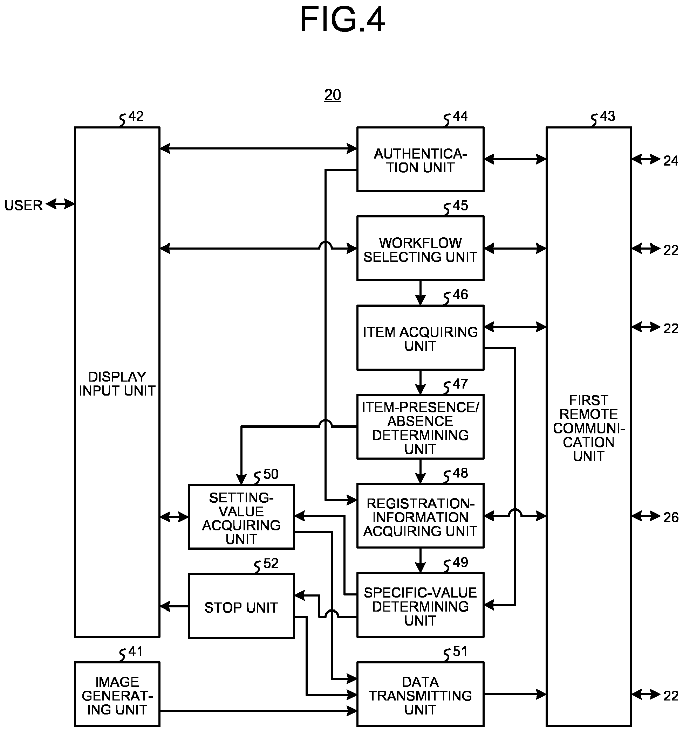

FIG. 4 is a diagram showing a functional configuration of the MFP 20. The MFP 20 includes an image generating unit 41, a display input unit 42, a first remote communication unit 43, an authentication unit 44, a workflow selecting unit 45, an item acquiring unit 46, an item-presence/absence determining unit 47, a registration-information acquiring unit 48, a specific-value determining unit 49, a setting-value acquiring unit 50, a data transmitting unit 51, and a stop unit 52.

The image generating unit 41 scans a sheet of paper set on an original table and generates image data. If multiple sheets of paper have been set on the original table, the image generating unit 41 can scan the sheets in a batch and generate document data including multiple pieces of image data.

The display input unit 42 displays thereon information for a user who is operating the MFP 20, and receives an operation from the user. The display input unit 42 is, for example, an operation panel.

The first remote communication unit 43 connects the MFP 20 to the process executing device 22 via the network by using a user account or the like of a user who is operating the MFP 20. While the user is logged in, the first remote communication unit 43 communicates with the process executing device 22. Furthermore, the first remote communication unit 43 connects the MFP 20 to the authentication device 24 and the user-information managing device 26 via the network.

The workflow selecting unit 45 acquires selection information for making a user select workflow information from the process executing device 22 via the network. For example, the workflow selecting unit 45 acquires screen information showing a list of executable workflows from the process executing device 22. The workflow selecting unit 45 displays, through the display input unit 42, selection information for selecting any of the acquired workflow information. Then, the workflow selecting unit 45 selects any of the workflow information according to a user's operation made on the display input unit 42.

The item acquiring unit 46 transmits workflow identification information of a workflow selected by a user to the process executing device 22, and acquires item information and user-specific information that are included in selected workflow information.

The item-presence/absence determining unit 47 determines whether any user-specific value is included in setting values used for executing a series of processes indicated in selected workflow information. If the item acquiring unit 46 has not acquired user-specific information, the item-presence/absence determining unit 47 determines that no user-specific value is included in the setting values. On the other hand, if the item acquiring unit 46 has acquired user-specific information, the item-presence/absence determining unit 47 determines that a user-specific value is included in the setting values.

If any user-specific values are included in the setting values, the item-presence/absence determining unit 47 calls the registration-information acquiring unit 48. On the other hand, if no user-specific value is included in the setting values, the item-presence/absence determining unit 47 calls the setting-value acquiring unit 50.

The registration-information acquiring unit 48 acquires user registration information, which includes information on a user, from the user-information managing device 26 if any user-specific values are included in the setting values. For example, by using login information received by the authentication unit 44 as a key, the registration-information acquiring unit 48 acquires user registration information from the user-information managing device 26. The registration-information acquiring unit 48 acquires user registration information including an e-mail address of a user who is currently logged in, a folder directory for the user who is currently logged in, key data for the user who is currently logged in, use authority for the user who is currently logged in, etc.

The specific-value determining unit 49 determines whether all user-specific values used in the execution of a series of processes defined in selected workflow information are included in user registration information acquired by the registration-information acquiring unit 48. If all the user-specific values are included in the user registration information, the specific-value determining unit 49 calls the setting-value acquiring unit 50. On the other hand, if any of the user-specific values is not included in the user registration information, the specific-value determining unit 49 calls the stop unit 52.

The setting-value acquiring unit 50 acquires setting values to be set in advance according to user's operation if no user-specific value is included in setting values. If any user-specific values are included in setting values and all the user-specific values are included in user registration information, the setting-value acquiring unit 50 acquires, of the setting values to be set in advance, setting values excluding the user-specific values according to user's operation.

The data transmitting unit 51 transmits image data generated by the image generating unit 41 to the process executing device 22 after the setting-value acquiring unit 50 has acquired necessary setting values according to user's operation. Furthermore, the data transmitting unit 51 transmits, together with the image data, workflow identification information of workflow, information selected by the workflow selecting unit 45 and all setting values indicated in item information to the process executing device 22.

The stop unit 52 makes, if any of user-specific values is not included in user registration information, a user unable to manipulate an instruction to execute a series of processes to be executed according to workflow information by using the user-specific value not included. Specifically, the stop unit 52 stops the data transmitting unit 51 from transmitting image data. Accordingly, the process executing device 22 cannot receive image data, etc. from the data transmitting unit 51, and cannot execute processes according to selected workflow information. Furthermore, the stop unit 52 displays, through the display input unit 42, an error message informing that the execution of the workflow has been stopped.

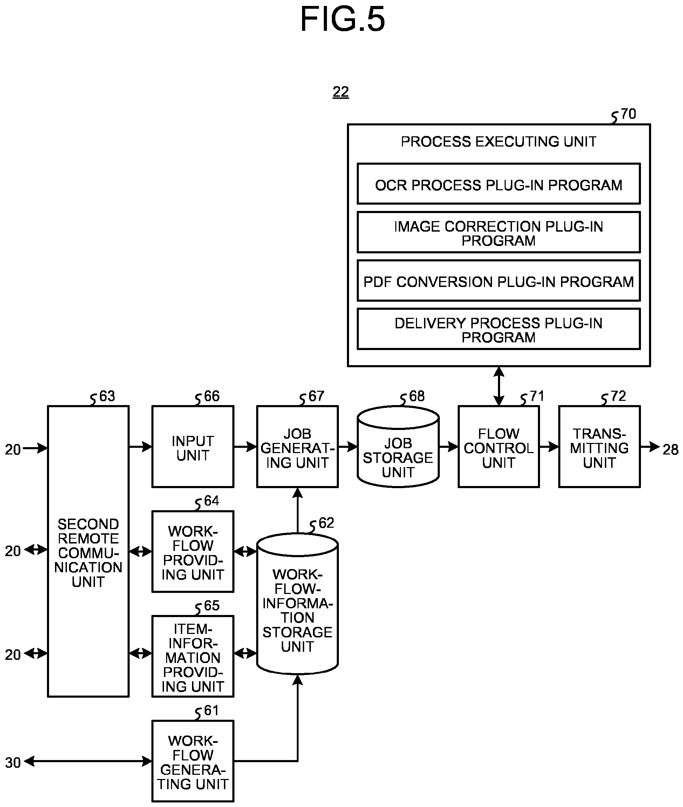

FIG. 5 is a diagram showing a functional configuration of the process executing device 22. The process executing device 22 includes a workflow generating unit 61, a workflow-information storage unit 62, a second remote communication unit 63, a workflow providing unit 64, an item-information providing unit 65, an input unit 66, a job generating unit 67, a job storage unit 68, a process executing unit 70, a flow control unit 71, and a transmitting unit 72.

The workflow generating unit 61 provides a user interface screen for generating workflow information to the administrator terminal 30. The workflow generating unit 61 generates workflow information according to administrator's operation. The workflow-information storage unit 62 stores therein the workflow information generated by the workflow generating unit 61.

The second remote communication unit 63 communicates with the MFP 20 while a user who is operating the MFP 20 is logged in. The workflow providing unit 64 receives a request for acquisition of selection information for making the user select workflow information from the MFP 20. The workflow providing unit 64 transmits selection information to the MFP 20 in response to the acquisition request from the MFP 20.

The item-information providing unit 65 receives a request for acquisition of item information and workflow identification information of a selected workflow from the MFP 20. The item-information providing unit 65 transmits item information and user-specific information that are included in workflow information corresponding to the received workflow identification information to the MFP 20 in response to the acquisition request from the MFP 20.

The input unit 66 receives image data generated by scanning a sheet from the MFP 20. If the MFP 20 has scanned multiple sheets in a batch and generated document data including multiple pieces of image data, the input unit 66 can receive this document data. Furthermore, the input unit 66 inputs workflow identification information and setting values together with the image data.

The job generating unit 67 reads workflow information corresponding to workflow identification information input from the input unit 66 from the workflow-information storage unit 62. The job generating unit 67 generates job data including flow information indicating the order of a series of processes, the image data, and the setting values based on the read workflow information and the image data and setting values input from the input unit 66. The job generating unit 67 stores the generated job data in the job storage unit 68.

The job storage unit 68 stores therein job data. Job data of an already-executed job is deleted from the job storage unit 68.

The process executing unit 70 performs a process specified by the flow control unit 71 on data specified by the flow control unit 71. The process executing unit 70 includes multiple different plug-in programs, and invokes and executes a plug-in program corresponding to the process specified by the flow control unit 71.

The process executing unit 70 includes, for example, an OCR process plug-in program, an image correction plug-in program, a PDF conversion plug-in program, a delivery process plug-in program, etc. Incidentally, the process executing unit 70 can include plug-in programs other than these.

The process executing unit 70 executes the OCR process plug-in program, thereby recognizing characters included in image data and generating text data. The process executing unit 70 executes the image correction plug-in program, thereby correcting image data. The process executing unit 70 executes the PDF conversion plug-in program, thereby converting a document file of image data to a PDF file. The process executing unit 70 executes the delivery process plug-in program, thereby transmitting document data obtained as a result of a series of processes to the delivery-destination server 28.

The flow control unit 71 reads job data stored in the job storage unit 68. Then, the flow control unit 71 instructs the process executing unit 70 to sequentially execute processes included in the job data on image data by using setting values included in the job data according to flow information included in the job data. Specifically, the flow control unit 71 instructs the process executing unit 70 to execute the processes in the order indicated in the flow information included in the job data. Then, when the process executing unit 70 executes each process, the flow control unit 71 gives the process executing unit 70 data to be processed and a setting value used in the process. Accordingly, the process executing unit 70 can invoke a required plug-in program and execute the process.

The transmitting unit 72 connects the process executing device 22 to the delivery-destination server 28 via the network. The transmitting unit 72 is called while the process executing unit 70 is processing, accesses the delivery-destination server 28, and transmits generated document data to the delivery-destination server 28.

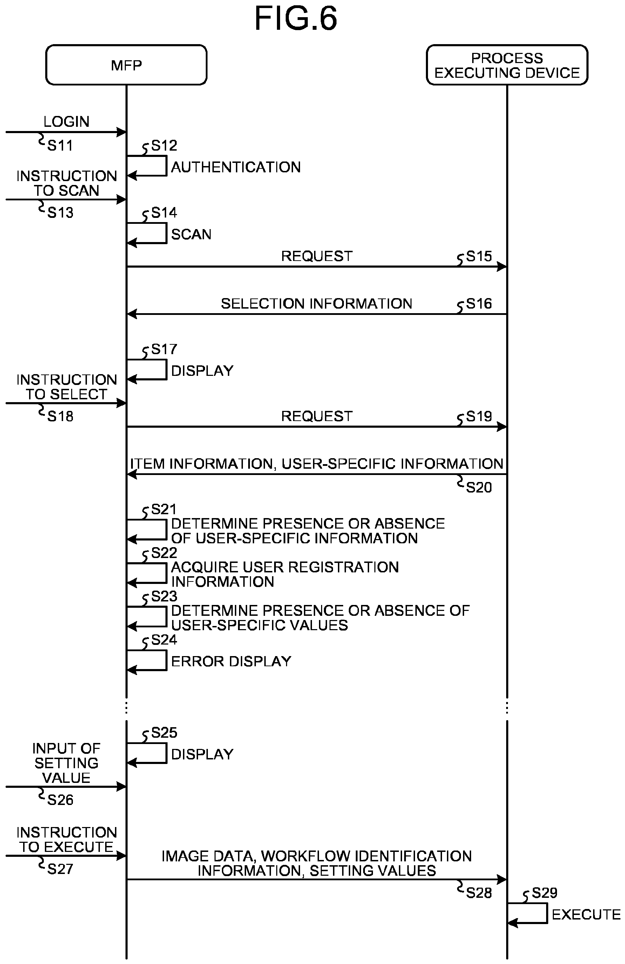

FIG. 6 is a sequence diagram illustrating the flow of a process performed in the information processing system 10. As an example, the information processing system 10 proceeds with the process as shown by the sequence diagram in FIG. 6.

First, the MFP 20 acquires user's login information (step S11). Then, the MFP 20 transmits the acquired login information to the authentication device 24 to cause the authentication device 24 to authenticate the login information (step S12). If the authentication is successful, the MFP 20 permits the user to do a scan.

Then, the MFP 20 receives an instruction to scan from the user (step S13). Upon receipt of the instruction to scan, the MFP 20 scans a sheet set on the original table and generates image data (step S14). Incidentally, the MFP 20 can execute the acquisition of login information (step S11) and the authentication (step S12) after the scanning.

Then, the MFP 20 transmits a request for acquisition of selection information to the process executing device 22 via the network (step S15). Then, the process executing device 22 returns selection information to the MFP 20 (step S16). For example, the process executing device 22 transmits screen information showing a list of executable workflows to the MFP 20. Then, the MFP 20 displays the selection information (step S17).

Then, the MFP 20 receives an instruction to select any of the workflow information from the user (step S18). Upon receipt of the instruction to select, the MFP 20 transmits a request for acquisition of item information to the process executing device 22 via the network (step S 19). At this time, the MFP 20 also transmits workflow identification information of the selected workflow information. Then, the process executing device 22 acquires item information and user-specific information from workflow information corresponding to the workflow identification information, and returns the item information and the user-specific information to the MFP 20 (step S20).

Then, the MFP 20 determines whether any user-specific values are included in setting values used to execute a series of processes indicated in the selected workflow information (step S21). If no user-specific value is included in the setting values, the MFP 20 goes on to step S25.

On the other hand, if any user-specific values are included in the setting values used to execute the series of processes, the MFP 20 acquires user registration information from the user-information managing device 26 (step S22).

Then, the MFP 20 determines whether all user-specific values used in the execution of a series of processes defined in the selected workflow information are included in the user registration information acquired by the registration-information acquiring unit 48 (step S23). If all the user-specific values used in the execution of the series of processes defined in the selected workflow information are included in the user registration information, the MFP 20 goes on to step S25.

On the other hand, if any of the user-specific values used in the execution of the series of processes defined in the selected workflow information is not included in the user registration information, the MFP 20 stops the data transmitting unit 51 from transmitting image data. Accordingly, the process executing device 22 cannot receive image data, etc. from the data transmitting unit 51, and the user cannot manipulate an instruction to execute the series of processes to be executed according to the workflow information by using the user-specific value not included. Then, the MFP 20 displays, through the display input unit 42, an error message informing that the execution of the workflow has been stopped (step S24).

On the other hand, if no user-specific value is included in the setting values, or if any user-specific values are included in the setting values and all the user-specific values are included in the user registration information, the MFP 20 displays a setting-value input screen (step S25). Then, the MFP 20 receives input of a setting value from the user, and acquires a setting value of each item (step S26). Incidentally, the MFP 20 acquires user-specific information from the user registration information. Then, the MFP 20 receives an instruction to execute from the user (step S27).

Upon receipt of the instruction to execute, the MFP 20 transmits image data generated by scanning the sheet to the process executing device 22 via the network (step S28). At this time, the MFP 20 transmits, together with the generated image data, the workflow identification information of the selected workflow information and all setting values indicated in the item information to the process executing device 22. Then, when the process executing device 22 has received the image data, etc. from the MFP 20, the process executing device 22 executes processes on the received image data according to the selected workflow information by using the received setting values (step S29).

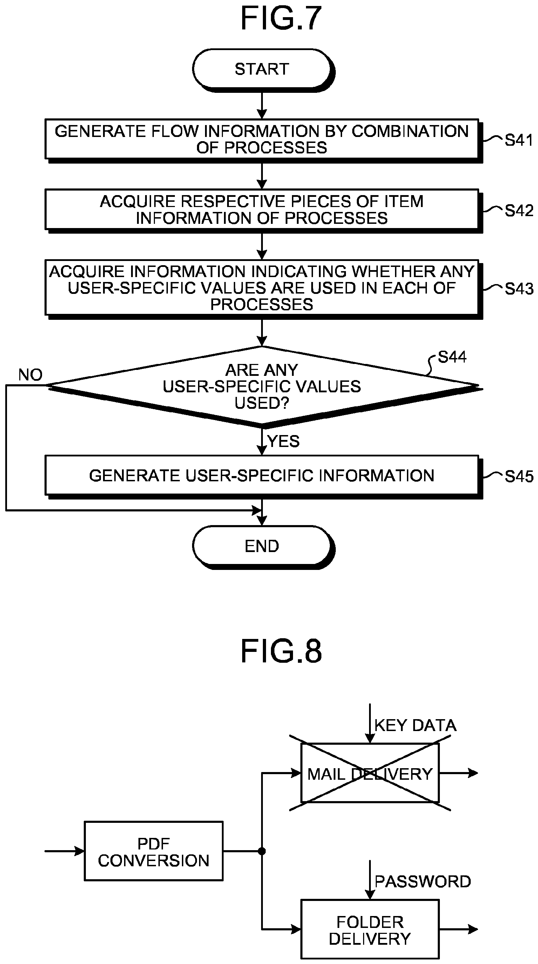

FIG. 7 is a flowchart illustrating the flow of a process performed by the process executing device 22 at the time of generation of workflow information. Prior to the execution of a workflow, the workflow generating unit 61 of the process executing device 22 receives an operation from the administrator terminal 30, and generates workflow information according to the procedure shown in FIG. 7.

First, in response to the operation from the administrator terminal 30, the workflow generating unit 61 generates flow information by a combination of multiple processes (plug-in programs) (step S41), and adds the generated flow information to workflow information. Then, the workflow generating unit 61 acquires respective pieces of item information of the multiple processes (step S42), and adds the acquired item information to the workflow information. For example, management information for managing a plug-in program includes a list of item information required to execute the plug-in program. The list of item information is generated by a creator of the plug-in program. The workflow generating unit 61 accesses respective pieces of management information of the plug-in programs and acquires item information.

Then, the workflow generating unit 61 acquires information indicating whether any user-specific values are used in each of the multiple processes (step S43). Management information for managing a plug-in program includes information indicating whether a user-specific setting value (a user-specific value) is used to execute the plug-in program. The workflow generating unit 61 accesses respective pieces of management information of the multiple processes (the plug-in programs), and acquires information indicating whether any user-specific values are used.

Then, the workflow generating unit 61 determines whether any user-specific values are used in any of the multiple processes (step S44). If any user-specific values are used in any of the processes (YES at step S44), the workflow generating unit 61 generates user-specific information, and adds the generated user-specific information to the workflow information (step S45). On the other hand, if no user-specific value is used in any of the multiple processes, the workflow generating unit 61 does not add user-specific information to the workflow information. If no user-specific value is used in any of the processes (NO at step S44), or if the workflow generating unit 61 has added user-specific information to the workflow information, the workflow generating unit 61 ends the execution of the present flow.

As described above, when executing a workflow, the information processing system 10 according to the present embodiment determines whether a user-specific setting value has been able to be acquired prior to the execution of the workflow. Accordingly, the information processing system 10 according to the present embodiment can prevent a process resulting in an error from being ordered by a user.

### (First Variation)

Subsequently, there is described the information processing system 10 according to a first variation of the embodiment. Incidentally, the information processing system 10 according to the first variation has about the same functions and configuration as the information processing system 10 described with reference to FIGS. 1 to 7, so points of difference are mainly explained below. The same goes for a second variation.

FIG. 8 is a diagram showing an example of workflow information including some of processes determined to be inexecutable. Even if some of processes cannot be executed, or even if some of setting values cannot be acquired, a workflow may be able to be completed except for the inexecutable processes.

For example, in the workflow shown in FIG. 8, after a PDF conversion, either a mail delivery or a folder delivery is executed. In this workflow, even if the mail delivery cannot be executed, or even if a setting value (for example, key data) used to execute the mail delivery cannot be acquired, a series of processes is completed by executing the folder delivery. The process executing device 22 can execute such a workflow.

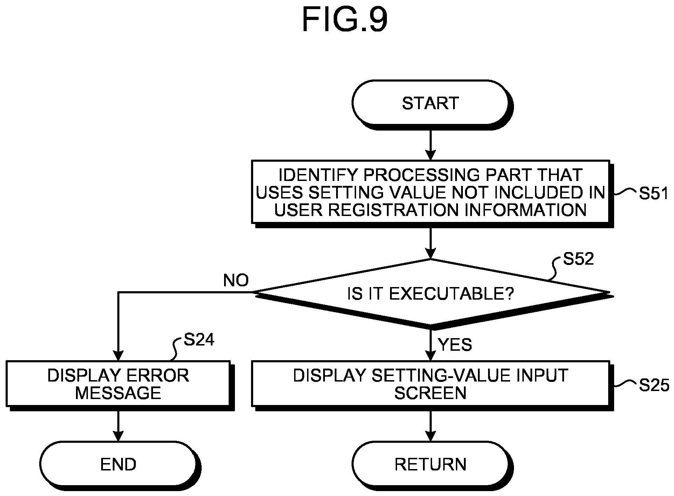

FIG. 9 is a flowchart showing a determining process performed in the MFP 20 according to the first variation. In the first variation, if any of user-specific values is not included in acquired user registration information, the MFP 20 executes the process shown in FIG. 9.

First, if any of user-specific values is not included in acquired user registration information, the specific-value determining unit 49 identifies a processing part that uses the user-specific value not included in the user registration information (step S51). For example, in the example shown in FIG. 8, if key data is not included in the user registration information, the specific-value determining unit 49 identifies the mail delivery process as a processing part that uses the user-specific value not included in the user registration information.

Then, the specific-value determining unit 49 determines whether a series of processes according to selected workflow information can be completed except for the processing part identified at step S51 (step S52). For example, if it is possible to go through the flow from the start point to the end point in flow information except for the identified processing part, the specific-value determining unit 49 determines that the series of processes can be completed. The end point includes, for example, a data delivery process.

If it is inexecutable (NO at step S52), i.e., if the series of processes according to the selected workflow information cannot be completed by excluding the process using the user-specific value not included in the user registration information, the stop unit 52 makes the user unable to manipulate an instruction to execute the series of processes to be executed according to the workflow information by using the user-specific value not included. Specifically, the stop unit 52 stops the data transmitting unit 51 from transmitting image data, and displays an error message informing that the execution of the workflow has been stopped (step S24).

On the other hand, if the series of processes according to the selected workflow information can be completed even by excluding the process using the user-specific value not included in the user registration information (YES at step S52), the setting-value acquiring unit 50 displays a setting-value input screen (step S25), and acquires a setting value. Then, after the setting-value acquiring unit 50 has acquired necessary setting values, the data transmitting unit 51 transmits generated image data, workflow identification information, and all setting values except for the user-specific value not included in the user registration information to the process executing device 22. Accordingly, the process executing device 22 can execute the series of processes according to the selected workflow information on the image data by using the setting values, except for the process using the user-specific value not included in the user registration information.

As described above, even if a user-specific setting value cannot be acquired, the information processing system 10 according to the first variation determines whether the execution of a workflow is possible or not prior to the execution of the workflow. Accordingly, even if a user-specific setting value cannot be acquired, the information processing system 10 according to the first variation can continue the execution of a workflow within a scope which does not result in an error.

### (Second Variation)

Subsequently, there is described the information processing system 10 according to a second variation of the embodiment.

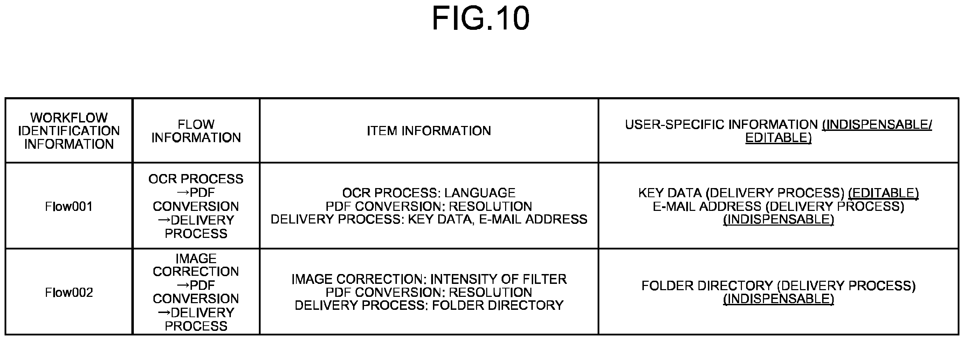

FIG. 10 is a diagram showing an example of workflow information in the second variation. In the second variation, whether each user-specific value indicated in user-specific information is indispensable or editable is set in workflow information.

The term indispensable means if the user-specific value cannot be acquired, an entire workflow process is not completed. The term editable means even if the user-specific value cannot be acquired, an entire workflow process can be completed. Therefore, if a user-specific value set to be editable cannot be acquired, the process executing device 22 can execute a series of processes indicated in workflow information by acquiring another setting value or by stopping the execution of a process using the user-specific value.

Whether each user-specific value is indispensable or editable is set by the workflow generating unit 61 at the time of generation of workflow information in accordance with an instruction of an administrator who is operating the administrator terminal 30.

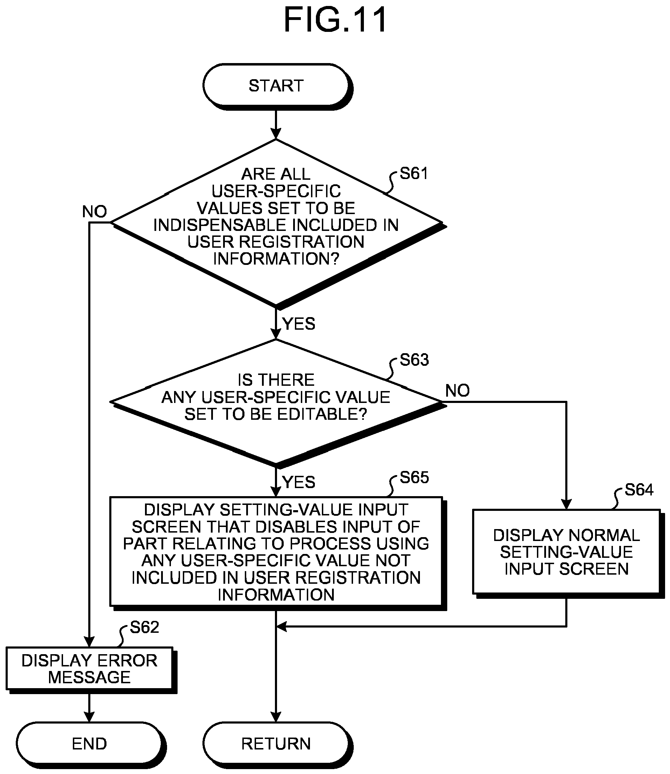

FIG. 11 is a flowchart showing a determining process performed in an MFP according to the second variation. In the second variation, if any of user-specific values is not included in acquired user registration information, the MFP 20 executes the process shown in FIG. 11.

If any of user-specific values is not included in acquired user registration information, first, the specific-value determining unit 49 determines whether all user-specific values set to be indispensable are included in the user registration information (step S61). If any of the user-specific values set to be indispensable is not included in the user registration information (NO at step S61), the stop unit 52 makes a user unable to manipulate an instruction to execute a series of processes to be executed according to workflow information by using the user-specific value not included. Specifically, the stop unit 52 stops the data transmitting unit 51 from transmitting image data, and displays an error message informing that the execution of the workflow has been stopped (step S62).

On the other hand, if all the user-specific values set to be indispensable are included in the user registration information (YES at step S61), the specific-value determining unit 49 further determines whether there is any user-specific value set to be editable in the user registration information (step S63). If there is no user-specific value set to be editable in the user registration information (NO at step S63), the setting-value acquiring unit 50 displays a setting-value input screen (step S64), and acquires a setting value.

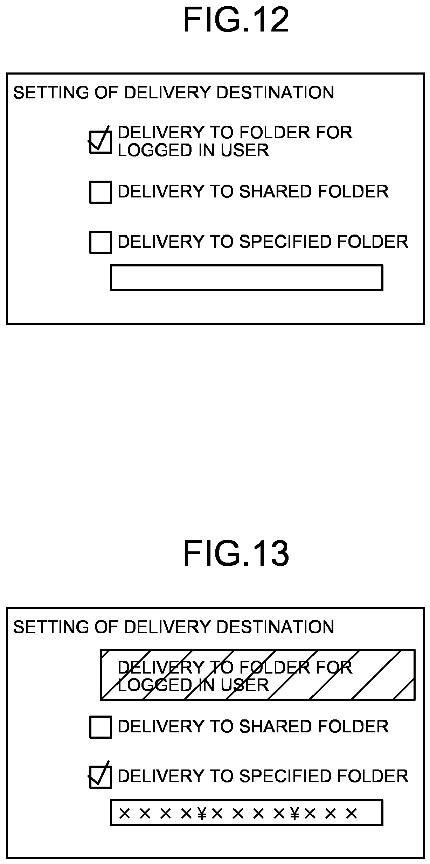

For example, in the case of receiving input of a setting value for selecting any one of three types of delivery processes as shown in FIG. 12, the setting-value acquiring unit 50 displays a setting-value input screen through which all types of delivery processes can be selected. Then, after the setting-value acquiring unit 50 has acquired a necessary setting value through such a screen, the data transmitting unit 51 transmits generated image data, workflow identification information, and the acquired setting value to the process executing device 22.

On the other hand, if there is a user-specific value set to be editable in the user registration information (YES at step S63), the setting-value acquiring unit 50 generates a setting-value input screen that disables input of a part relating to a process using any user-specific value not included in the user registration information so that a process using a user-specific value which has not been able to be acquired is not performed, and displays the generated setting-value input screen (step S65). Here, the case where there is a user-specific value set to be editable in the user registration information means all user-specific values set to be indispensable are included in the user registration information and also any of user-specific values set to be editable is not included in the user registration information.

For example, in the case of receiving input of a setting value for selecting any one of three types of delivery processes as shown in FIG. 13, the setting-value acquiring unit 50 generates a screen that makes a part for selecting a delivery process using a user-specific value which has not been able to be acquired grayed out and not selectable. Accordingly, the setting-value acquiring unit 50 can prevent a process using a user-specific value which has not been able to be acquired from being performed. Then, after the setting-value acquiring unit 50 has acquired a necessary setting value through such a screen, the data transmitting unit 51 transmits generated image data, workflow identification information, and the acquired setting value to the process executing device 22.

As described above, even when a user-specific setting value cannot be acquired, if the setting value has been set to be editable, the information processing system 10 according to the second variation generates a setting-value input screen so that a process using the user-specific value which has not been able to be acquired is not performed. Accordingly, even if a user-specific setting value cannot be acquired, the information processing system 10 according to the second variation can continue the execution of a workflow by inputting a setting value so that the execution of the workflow will not result in an error.

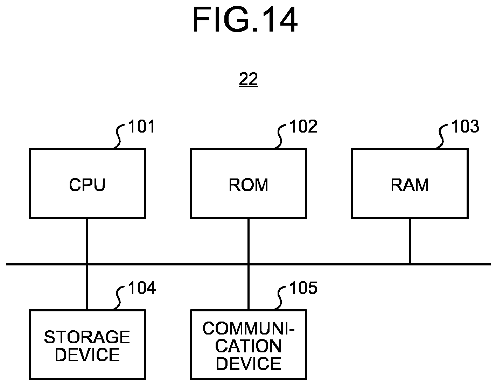

FIG. 14 is a diagram illustrating an example of a hardware configuration of a computer that realizes the process executing device 22. Incidentally, the authentication device 24, the user-information managing device 26, the delivery-destination server 28, and the administrator terminal 30 also have the same configuration, so description of respective hardware configurations of these devices is omitted.

The computer includes a CPU 101, a read-only memory (ROM) 102, a random access memory (RAM) 103, a storage device 104, and a communication device 105. The CPU 101, the ROM 102, the RAM 103, the storage device 104, and the communication device 105 are connected by a bus.

The CPU 101 expands a program stored in the storage device 104 into the RAM 103 and executes the program, thereby controls components to perform data input/output or data processing. The ROM 102 has stored therein a start program that causing the computer to load a basic input/output system (BIOS) and a bootstrap loader from the storage device 104 into the RAM 103. The bootstrap loader loads an operating system (OS) from the storage device 104 into the RAM 103.

The storage device 104 can be any non-volatile memory, such as a solid state drive (SSD). The storage device 104 has stored therein the OS and a device driver. Furthermore, workflow information has been stored in the storage device 104. Moreover, various plug-in programs have plug-in program. These programs are distributed in such a manner that each program is recorded on a computer-readable recording medium in an installable or executable file format. Furthermore, these programs can be distributed by causing a user to download each program from a server. The communication device 105 is a device for connecting the computer to, for example, a LAN.

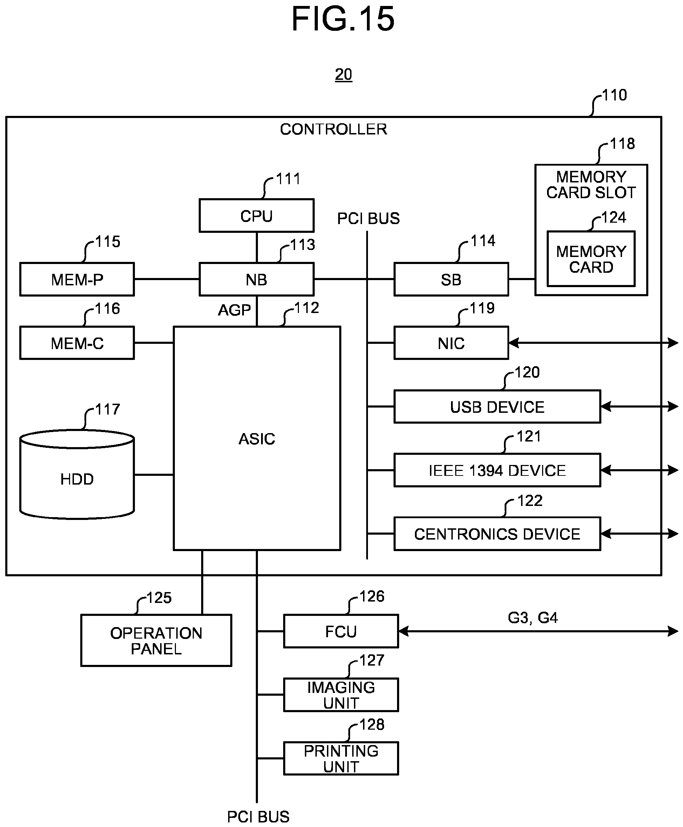

FIG. 15 is a diagram showing an example of a hardware configuration of the MFP 20. As an example, the MFP 20 includes a controller 110, an operation panel 125, a facsimile control unit (FCU) 126, an imaging unit 127, and a printing unit 128.

The controller 110 includes a CPU 111, an application specific integrated circuit (ASIC) 112, a North Bridge (NB) 113, a South Bridge (SB) 114, a system memory (MEM-P) 115, a local memory (MEM-C) 116, a hard disk drive (HDD) 117, a memory card slot 118, a network interface controller (NIC) 119, a USB device 120, an IEEE 1394 device 121, and a Centronics device 122.

The CPU 111 is an IC for executing various information processing, and executes applications on the OS or a platform by the process in parallel. The ASIC 112 is a semiconductor device for image processing. The NB 113 is a bridge for connecting the CPU 111 and the ASIC 112. The SB 114 is a bridge for connecting the NB 113 and a peripheral device, etc. The ASIC 112 and the NB 113 are connected, for example, via an accelerated graphics port (AGP).

The MEM-P 115 is a memory connected to the NB 113. The MEM-C 116 is a memory connected to the ASIC 112. The HDD 117 is storage connected to the ASIC 112, and is used for accumulation of image data, accumulation of document data, accumulation of programs, accumulation of font data, accumulation of form data, etc.

The HDD 117 has stored therein various application programs (a copy program, a scanner program, a printer program, a fax program, etc.). Furthermore, the HDD 117 has stored therein various plug-in programs.

The memory card slot 118 is connected to the SB 114, and is used to set (insert) a memory card 124. The memory card 124 is a flash memory such as a USB memory, and is used to distribute a program. Furthermore, a program can be distributed by a user downloading the program from a predetermined server into the MFP 20.

The NIC 119 is a controller for performing data communication using a MAC address or the like via a network. The USB device 120 is a device for providing a serial port based on the Universal Serial Bus (USB) standard. The IEEE 1394 device 121 is a device for providing a serial port based on the IEEE 1394 standard. The Centronics device 122 is a device for providing a parallel port based on the Centronics specifications. The NIC 119, the USB device 120, the IEEE 1394 device 121, and the Centronics device 122 are connected to the NB 113 and the SB 114 via a Peripheral Component Interconnect (PCI) bus.

The operation panel 125 is hardware (an operation unit) for a user to perform an input to the MFP 20, and is also hardware (a display unit) for the MFP 20 to display thereon a menu screen. The operation panel 125 is connected to the ASIC 112. The FCU 126, the imaging unit 127, and the printing unit 128 are connected to the ASIC 112 via the PCI bus.

The imaging unit 127 optically scans an original put on a contact glass, and performs an A/D conversion on a reflected light from the original to process an image, thereby generates color or monochrome image data.

The printing unit 128 includes, for example, tandem photoconductive drums, and modulates laser beams based on image data or page description language (PDL) data and scans the photoconductive drums, thereby forming latent images. Then, the printing unit 128 transfers a one-page image into which the latent images have been each developed by adhesion of toner onto a sheet by the action of heat and pressure. The printing unit 128 is not limited to such an electrophotographic plotter, and can be an inkjet plotter engine that forms an image by discharging ink droplets.

The FCU 126 is connected to a network via the NIC 119 and transmits/receives image data in accordance with a communication procedure corresponding to, for example, the T.37 and T.38 standards, or is connected to a public telecommunication network and transmits/receives image data in accordance with a communication procedure corresponding to, for example, the G3 and G4 standards. Furthermore, even if the FCU 126 has received image data while the MFP 20 is powered OFF, the FCU 126 can activate and cause the printing unit 128 to print the image data on a sheet.

A program executed by the MFP 20 according to the present embodiment is provided in such a manner that the program is recorded on a computer-readable recording medium, such as a CD-ROM, a flexible disk (FD), a CD-R, or a DVD, in an installable or executable file format

Furthermore, the program executed by the MFP 20 according to the present embodiment can be provided in such a manner that the program is stored on a computer connected to a network such as the Internet so that the program can be downloaded via the network. Moreover, the program executed by the MFP 20 according to the present embodiment can be provided or distributed via a network such as the Internet. Furthermore, the program according to the present embodiment can be built into a ROM or the like in advance.

The program causing the MFP 20 to function has a configuration of modules including an image generating module, a display input module, a first remote communication module, an authentication module, a workflow selecting module, an item acquiring module, an item-presence/absence determining module, a registration-information acquiring module, a specific-value determining module, a setting-value acquiring module, a data transmitting module, and a stop module. A processor (the CPU 111) as actual hardware reads out the program from a storage medium (the HDD 117 or the like) and executes the program, thereby the above-described units are loaded onto main storage, and the image generating unit 41, the display input unit 42, the first remote communication unit 43, the authentication unit 44, the workflow selecting unit 45, the item acquiring unit 46, the item-presence/absence determining unit 47, the registration-information acquiring unit 48, the specific-value determining unit 49, the setting-value acquiring unit 50, the data transmitting unit 51, and the stop unit 52 are generated on the main storage. Incidentally, some or all of these units can be composed of hardware.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An information processing system comprising:
an image generating device configured to generate image data; and
a process executing device configured to execute a series of processes defined in workflow information on the image data, wherein
the workflow information includes flow information that indicates the flow of the series of processes, item information that indicates items of setting values to be set in advance to execute the series of processes, and user-specific information that indicates a user-specific value specific to each user out of the setting values to be set in advance, and
the image generating device includes:
an image generating unit configured to generate image data;
a workflow selecting unit configured to select any of pieces of workflow information according to a user's operation;
a registration-information acquiring unit configured to acquire user registration information including information on the user;
a specific-value determining unit configured to determine whether all user-specific values used in execution of a series of processes defined in the selected workflow information are included in the user registration information; and
a stop unit configured to make, if any of the user-specific values is not included in the user registration information, the user unable to manipulate an instruction to execute a series of processes to be executed according to workflow information by using the user-specific value not included.

2. The information processing system according to claim 1, wherein
the image generating device further includes:
a setting-value acquiring unit configured to, if all the user-specific values are included in the user registration information, acquire, of the setting values to be set in advance, a setting value except for the user-specific values based on the item information and the user-specific information according to a user's operation; and
a data transmitting unit configured to transmit the generated image data, workflow identification information that identifies the selected workflow information, and all the setting values indicated in the item information to the process executing device, and
the process executing device executes the series of processes on the image data by using the setting values according to the selected workflow information.

3. The information processing system according to claim 2, wherein
the image generating device further includes an authentication unit configured to authenticate login information input by the user, and
the registration-information acquiring unit acquires user registration information by using the login information as a key.

4. The information processing system according to claim 2 or 3, wherein
if any of the user-specific values is not included in the user registration information, the specific-value determining unit determines whether the series of processes according to the selected workflow information can be completed except for a process using the user-specific value not included in the user registration information,
if the series of processes according to the selected workflow information cannot be completed by excluding the process using the user-specific value not included in the user registration information, the stop unit makes the user unable to manipulate an instruction to execute the series of processes to be executed according to the workflow information by using the user-specific value not included, if the series of processes according to the selected workflow information can be completed even by excluding the process using the user-specific value not included in the user registration information, the data transmitting unit transmits the generated image data, the workflow identification information, and all the setting values except for the user-specific value not included in the user registration information to the process executing device, and
the process executing device executes the series of processes, except for the process using the user-specific value not included in the user registration information, on the image data by using the setting values according to the selected workflow information.

5. The information processing system according to claim 2 or 3, wherein
whether each user-specific value indicated in the user-specific information is indispensable or editable has been set in the workflow information,
if any of the user-specific values is not included in the user registration information, the specific-value determining unit further determines whether all user-specific values set to be indispensable are included in the user registration information,
if any of the user-specific values set to be indispensable is not included in the user registration information, the stop unit makes the user unable to manipulate an instruction to execute a series of processes to be executed according to workflow information by using the user-specific value not included, and
if all the user-specific values set to be indispensable are included in the user registration information and any of user-specific values set to be editable is not included in the user registration information, the setting-value acquiring unit generates a setting-value input screen that disables input of a part relating to a process using any user-specific value not included in the user registration information so that a process using a user-specific value which has not been able to be acquired is not performed, and displays the generated setting-value input screen.

6. The information processing system according to any one of claims 2 to 5, wherein
the process executing device includes:
an input unit configured to receive the image data, the workflow identification information, and the setting values from the image generating device;
a process executing unit configured to perform a specified process; and
a flow control unit configured to cause the process executing unit to sequentially execute processes according to workflow information identified by the workflow identification information, and, when the process executing unit executes each process, the flow control unit gives the process executing unit data to be processed and a setting value used in the process.

7. An information processing method that is implemented on an information processing system that includes an image generating device configured to generate image data; and a process executing device configured to execute a series of processes defined in workflow information on the image data, wherein, the workflow information includes flow information that indicates the flow of the series of processes, item information that indicates items of setting values to be set in advance to execute the series of processes, and user-specific information that indicates a user-specific value specific to each user out of the setting values to be set in advance, the information processing method comprising:
an image generating unit of the image generating device generates image data;
a workflow selecting unit of the image generating device selects any of pieces of workflow information according to a user's operation;
a registration-information acquiring unit of the image generating device acquires user registration information including information on the user;
a specific-value determining unit of the image generating device determines whether all user-specific values used in execution of a series of processes defined in the selected workflow information are included in the user registration information; and
a stop unit of the image generating device makes, if any of the user-specific values is not included in the user registration information, the user unable to manipulate an instruction to execute a series of processes to be executed according to workflow information by using the user-specific value not included.

8. The information processing method according to claim 7, further comprising;
a setting-value acquiring unit of the image generating device acquires, if all the user-specific values are included in the user registration information, of the setting values to be set in advance, a setting value except for the user-specific values, based on the item information and the user-specific information according to a user's operation;
a data transmitting unit of the image generating device transmits the generated image data, workflow identification information that identifies the selected workflow information, and all the setting values indicated in the item information to the process executing device, and
the process executing device executes the series of processes on the image data by using the setting values according to the selected workflow information.

9. The information processing method according to claim 8, further comprising;
an authentication unit of the image generating device authenticates login information input by the user, and
the registration-information acquiring unit acquires user registration information by using the login information as a key.

10. The information processing method according to claim 8 or 9, wherein
if any of the user-specific values is not included in the user registration information, the specific-value determining unit determines whether the series of processes according to the selected workflow information can be completed except for a process using the user-specific value not included in the user registration information,
if the series of processes according to the selected workflow information cannot be completed by excluding the process using the user-specific value not included in the user registration information, the stop unit makes the user unable to manipulate an instruction to execute the series of processes to be executed according to the workflow information by using the user-specific value not included, if the series of processes according to the selected workflow information can be completed even by excluding the process using the user-specific value not included in the user registration information, the data transmitting unit transmits the generated image data, the workflow identification information, and all the setting values except for the user-specific value not included in the user registration information to the process executing device, and
the process executing device executes the series of processes, except for the process using the user-specific value not included in the user registration information, on the image data by using the setting values according to the selected workflow information.

11. The information processing method according to claim 8 or 9, wherein
whether each user-specific value indicated in the user-specific information is indispensable or editable has been set in the workflow information,
if any of the user-specific values is not included in the user registration information, the specific-value determining unit further determines whether all user-specific values set to be indispensable are included in the user registration information,
if any of the user-specific values set to be indispensable is not included in the user registration information, the stop unit makes the user unable to manipulate an instruction to execute a series of processes to be executed according to workflow information by using the user-specific value not included, and
if all the user-specific values set to be indispensable are included in the user registration information and any of user-specific values set to be editable is not included in the user registration information, the setting-value acquiring unit generates a setting-value input screen that disables input of a part relating to a process using any user-specific value not included in the user registration information so that a process using a user-specific value which has not been able to be acquired is not performed, and displays the generated setting-value input screen.

12. The information processing method according to any one of claims 8 to 11, further comprising;
an input unit of the process executing device receives the image data, the workflow identification information, and the setting values from the image generating device;
a process executing unit of the process executing device performs a specified process; and
a flow control unit of the process executing device causes the process executing unit to sequentially execute processes according to workflow information identified by the workflow identification information, and, when the process executing unit executes each process, the flow control unit gives the process executing unit data to be processed and a setting value used in the process.

13. An image generating device connected to a process executing device that executes a series of processes defined in workflow information on image data, wherein
the workflow information includes flow information that indicates the flow of the series of processes, item information that indicates items of setting values to be set in advance to execute the series of processes, and user-specific information that indicates a user-specific value specific to each user out of the setting values to be set in advance,
the image generating device comprising:
an image generating unit configured to generate image data;
a workflow selecting unit configured to select any of pieces of workflow information according to a user's operation;
a registration-information acquiring unit configured to acquire user registration information including information on the user;
a specific-value determining unit configured to determine whether all user-specific values used in execution of a series of processes defined in the selected workflow information are included in the user registration information; and
a stop unit configured to make, if any of the user-specific values is not included in the user registration information, the user unable to manipulate an instruction to execute a series of processes to be executed according to workflow information by using the user-specific value not included.
